# EUROPEAN PATENT SPECIFICATION

(11) **EP 2 144 486 B1**
(45) Date of publication and mention of the grant of the patent: **22.08.2012**
(21) Application number: 08767123.6
(22) Date of filing: 06.05.2008
(51) Int. Cl.: A01C 23/00

(54) **DEVICE IN CONNECTION WITH AN AGRICULTURAL MACHINE**
VORRICHTUNG IN VERBINDUNG MIT EINER LANDWIRTSCHAFTSMASCHINE
DISPOSITIF DANS UNE MACHINE AGRICOLE

(30) Priority: 07.05.2007 SE 0701097
(43) Date of publication of application: 20.01.2010
(73) Proprietor: Sahlström, Nils-Johan, 532 96 Skara (SE)
(72) Inventor: Sahlström, Nils-Johan, 532 96 Skara (SE)
(74) Representative: Bergentall, Annika Maria
(86) International application number: PCT/SE2008/050511
(87) International publication number: WO 2008/136751

(56) References cited:
- EP-A1- 0 772 965
- DE-A1-102004 053 085
- DE-A1-102004 053 085
- DE-C1- 4 313 326
- DE-C1- 4 313 326

## Description

Known manure spreaders, intended to spread out cattle manure on the fields by driving with tank trailers filled with liquid cattle manure and let discharge the manure behind the trailer when a tractor tows the trailer across the intended fields desired to be manured, have not managed to spread the manure uniformly, and neither managed to start the outfeed uniformly. Instead of starting as a fan shape, it is an advantage to be able to start with straight outfeed of the manure.

As an example of known manure spreaders, reference is made to EP 0 458 595 A1, which relates to a manure spreader formed of paired pipes having holes that can come right opposite each other. Inside the interconnected pipes, there is a rotary screw conveyor. Via a conduit , liquid manure is fed into the screw and the inner pipe. Via the holes , manure is fed out, and by means of plough blades on the outer rotatable pipe , the manure is fed down into the soil. This solution is complicated and does not allow to efficiently prevent larger objects in manure, such as, e.g., straw or hay, from obstructing outfeed

The present invention relates to a spreading ramp for distributing liquid manure that is supplied to the ground from a container that is run along the intended surface desired to be manured, or that is placed or run beside the intended surface to be manured and that is connected with the spreading ramp via a hose, which spreading ramp is formed out of an elongate chute, whose upper side, when in working position, is closed and having a plurality of openings arranged in the bottom portion of the chute, and that said plate is arranged to act as manure distributor inside the chute, and that, inside said chute, there is a holed elongate plate situated in the bottom portion of the chute and reciprocatingly driven in the longitudinal direction of the chute. openings or being accumulated in the end of the closed outfeed chute.

Further, reference is made to DE 10 2004 053 085 A1, which also shows a screw contained in a space for outfeed of liquid manure. Figs. 3-9 show solutions of outfeed openings , which in a paired way can be brought in position right opposite each other, either by they being moved axially in relation to each other or they being swung in relation to each other. Manure is fed out further through hoses to the soil. Neither this previously known device allows uniform supply and outfeed of manure without manure being constantly screwed from one end of the chute toward the other end thereof. A certain cutting action between the screw and hole openings should be attainable. The desired width of the outfeed holes may, in that connection, be chosen by displacement or turning of a curved part. However, no cutting action is provided with paired mutual supports for cutable objects thereto. Neither is no compulsorily downward feed of manure through said openings provided, but the screw can press the manure toward the far end portion of the chute without the same being fed down, out of the chute.

The DE 4313326 C1 discloses a spreading ramp for distributing manure from the inside of a chute to sleeve couplings and hoses . Inside told chute there is a holes elongate plate . Manure is distributed inside said chute by said plate . A cutting action between the edges of the holes in said plate and the edges of the sleeve couplings should be attainable, like a pair of scissors. The width of outfeed holes is very large, and big objects may pass down through said holes. However, no cutting action is provided with paired mutual supports and the edges of the holes in the movable elongate plate. Solid portions of the manure can accumulate near the outfeed holes, preventing a uniform flow or even dogging the holes.

Therefore, the main object of the present invention is, among other things, to solve said problems in a simple and efficiently way.

Said object is attained by means of a spreading ramp according to the present invention that essentially is characterized in that, on each side of said chute openings, transverse bars that extend perpendicularly to the direction of motion of the plate and are angled or deflected with respect to the bottom side of the chute are arranged, said bars, together with the mutually counter-directed opening edges of the chute openings, forming cutting guides with the hole edges of the plate.

Spreading ramps for liquid manure comprise important items indicated below;
- The construction requires a pump that fills a ramp in different lengths. As an example, two pieces are suggested each of which is 6 m long on each side of the tank trailer/barrel.
- Manure in liquid form is fed in from one side where the ramp preferably is larger and then decreases outward toward the end, this giving a more uniform flow in a long ramp. It may also be of a uniform thickness:
- The admission matter from the pump to the ramp hits against a plate inside the ramp box. In order for the flow of manure not to "hit" directly down against the nearest holes (the discharges), it hits on a plate that is approx. 40 mm wide, which is equal to the diameter of the holes and squirts the manure in the direction of the ramp. On both sides of the plate, the slit is approx. 45 mm wide so that the nearest holes thereby receive manure, but in a calmer flow.
- The ramp is equipped with holes facing the ground, alternatively 45° or facing straight upward..
- The holes are equipped with sleeve couplings, say of 0 50 mm or larger/smaller. On the sleeve coupling, a short hose may be attached in order to get the distribution of manure in a closed system down to the ground and thereby attain as small a ammonia release (N/nitrogen) as possible.
- The ramp may advantageously also be run without hoses.
- Inside the ramp, a steel band is moved by means of a hydraulic motor with reciprocating eccentric motion. The steel band is equipped with holes equidistantly (or non-equidistantly) with the sleeve couplings. On each side of outgoing holes above the sleeve couplings, there is a steel on each side, which may be somewhat pressed/angled to get strength. Then, the steel band runs reciprocatingly between said "scrapers", and, in doing so, a cutting action and cleaning of the holes are obtained. Alternatively, the steel band may be driven by means of a hydraulic piston.
- By selecting differently long stroke length, the discharge of manure is regulated. This may also be regulated by different dimension of holes, which requires replacement of bands.
- On the same band, also a plurality of holes having different dimension may be present in order to attain different amounts of discharge of manure.

The invention is described below in the form of a number of preferred embodiment examples, reference being made to the accompanying drawings, in which,

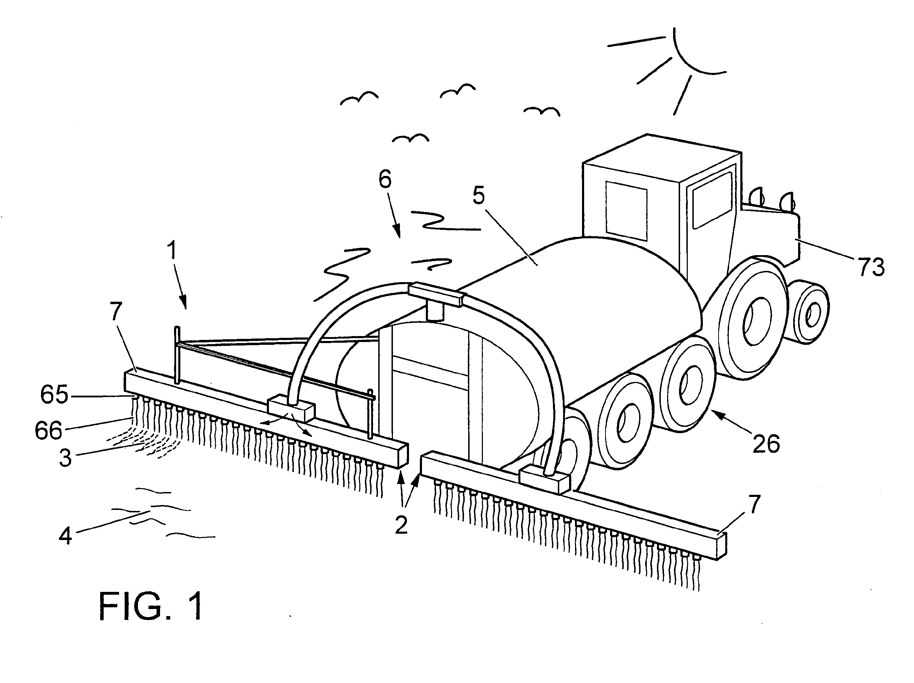

Fig. 1 schematically shows the invention in an active spreader state,

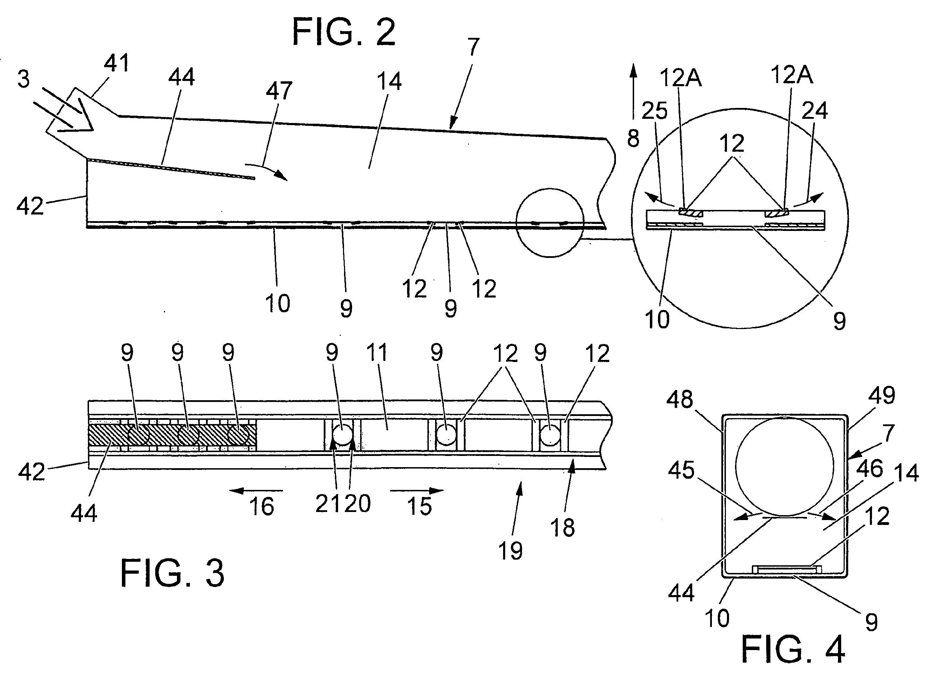

Fig. 2 shows a section view of the chute of the spreader and with encircled enlargement of anvils,
Fig. 3 shows a view from above of a part of the interior of the chute,
Fig. 4 shows a cross-section of the chute at the inlet end thereof,

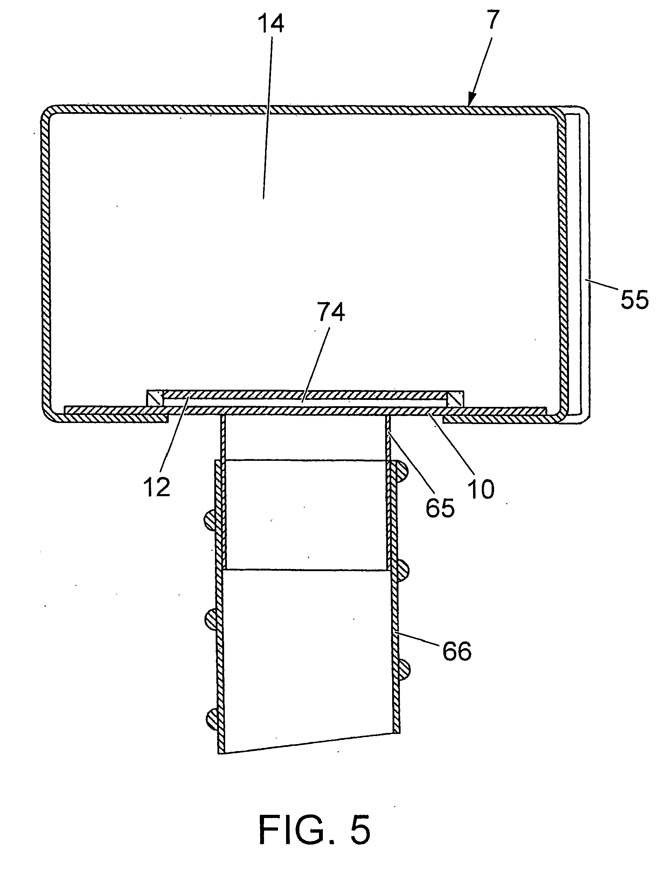

Fig. 5 shows an additional cross-section of the chute having a sleeve coupling and hose,

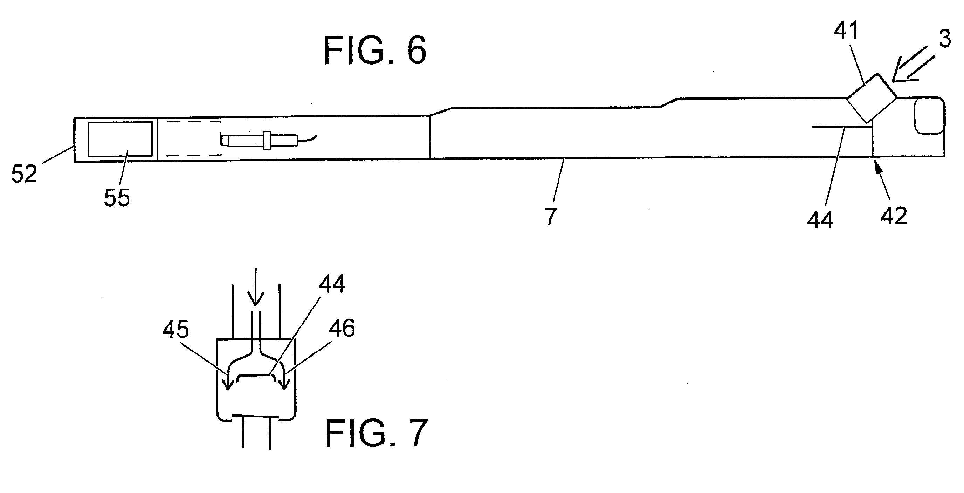

Figs. 6-7 show additional views of the chute,

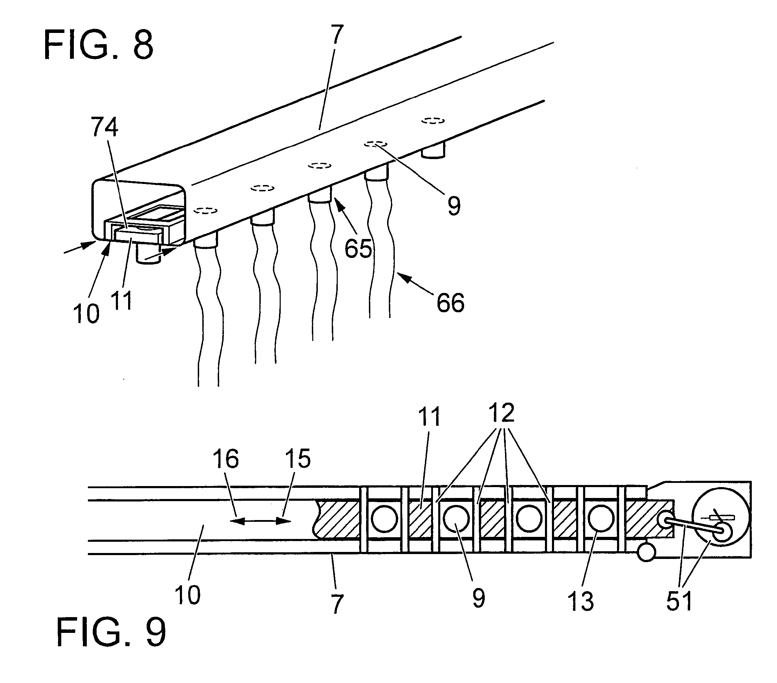

Fig. 8 shows the function of a part of the chute and a movable plate included therein,
Fig. 9 shows a mechanism for driving the plate,

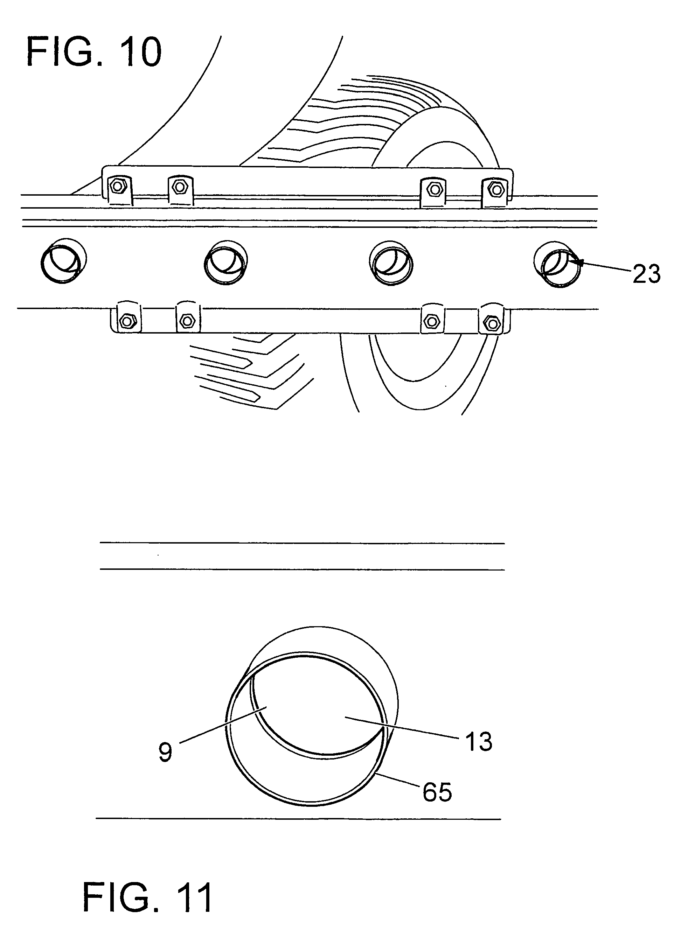

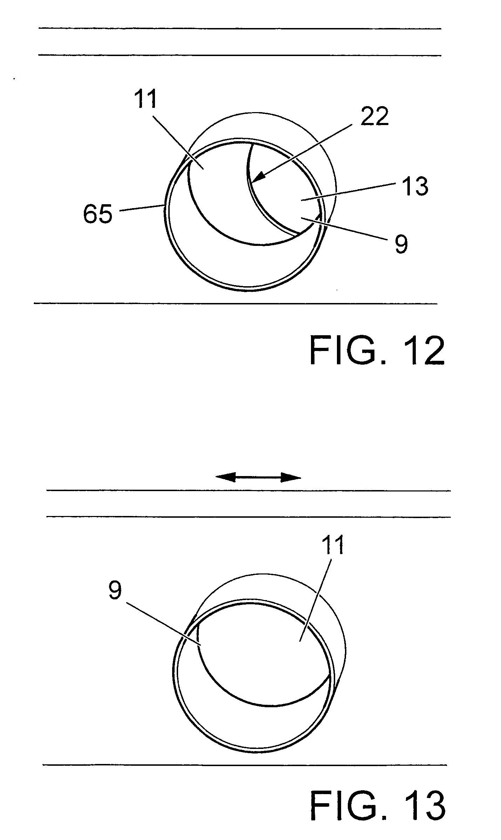

Figs. 10-13 show different opening pictures of the outlet of the chute,

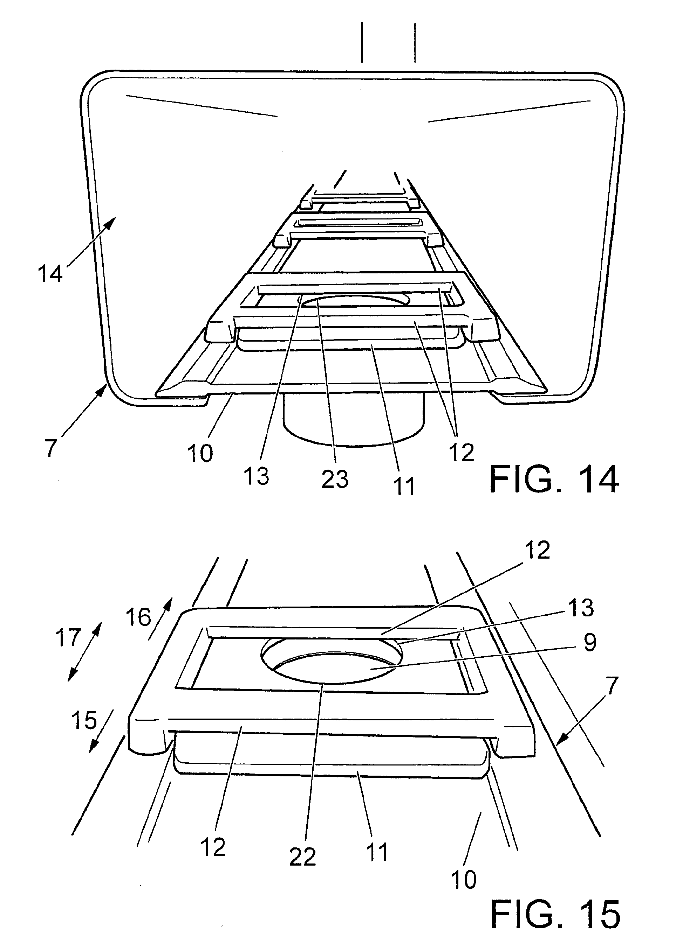

Figs. 14-15 show inside the chute,

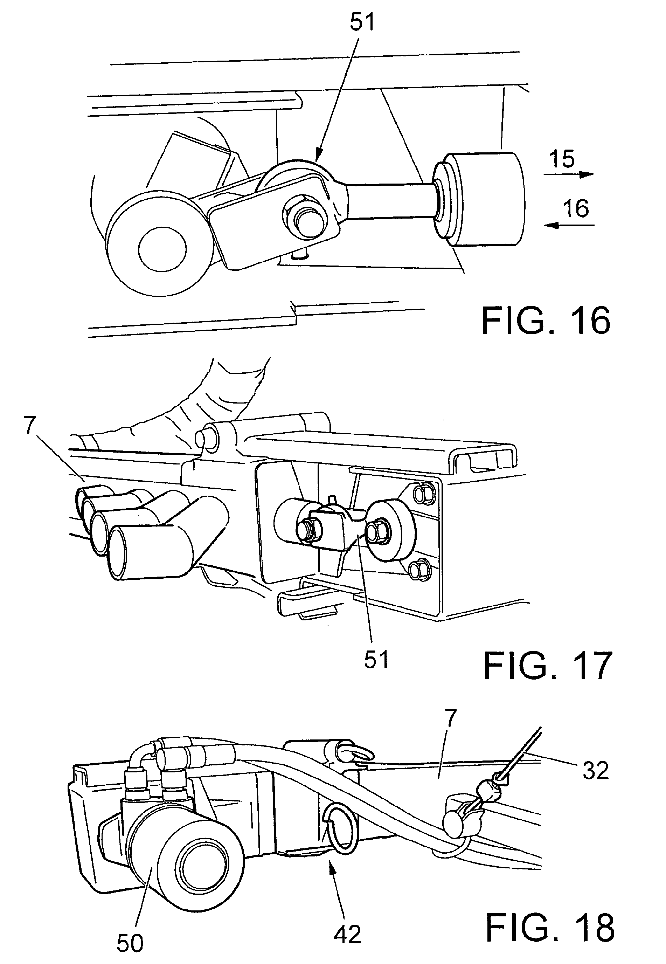

Figs. 16-18 show a transportation plate driving arrangement in the chute, and

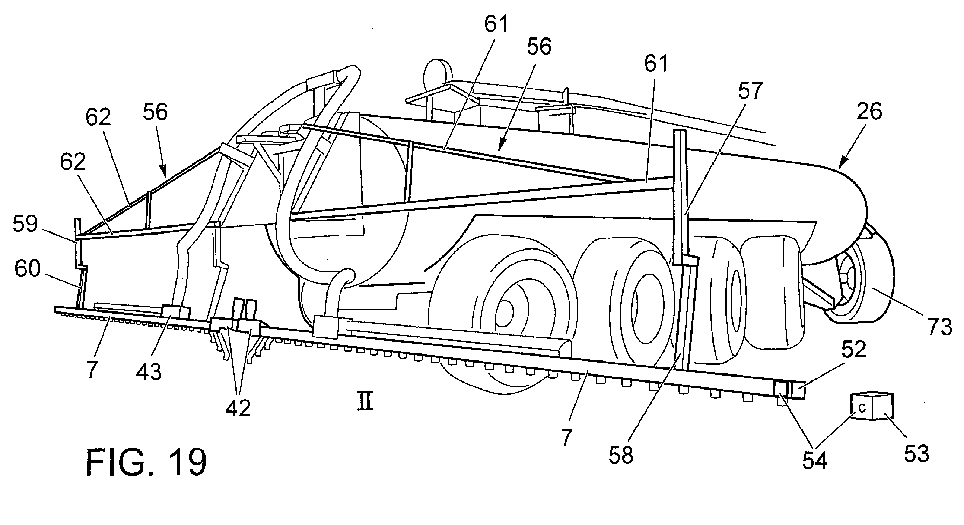

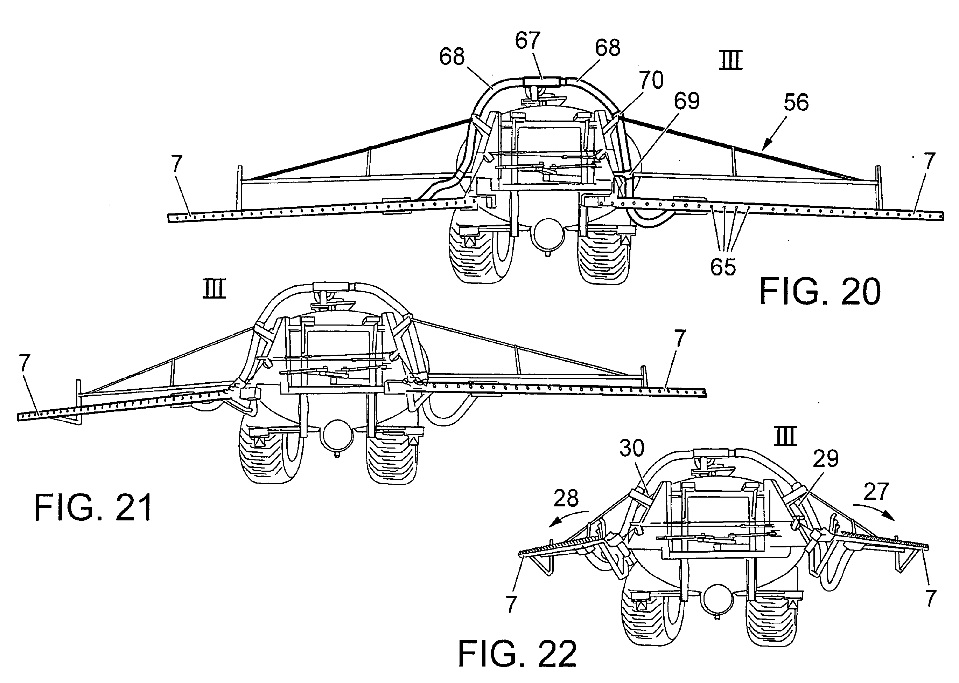

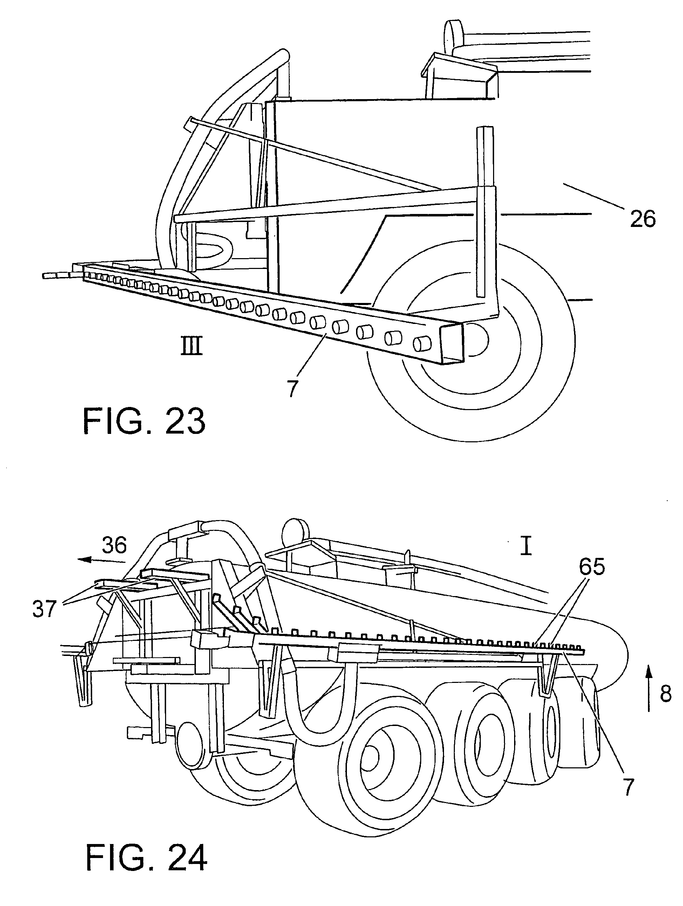

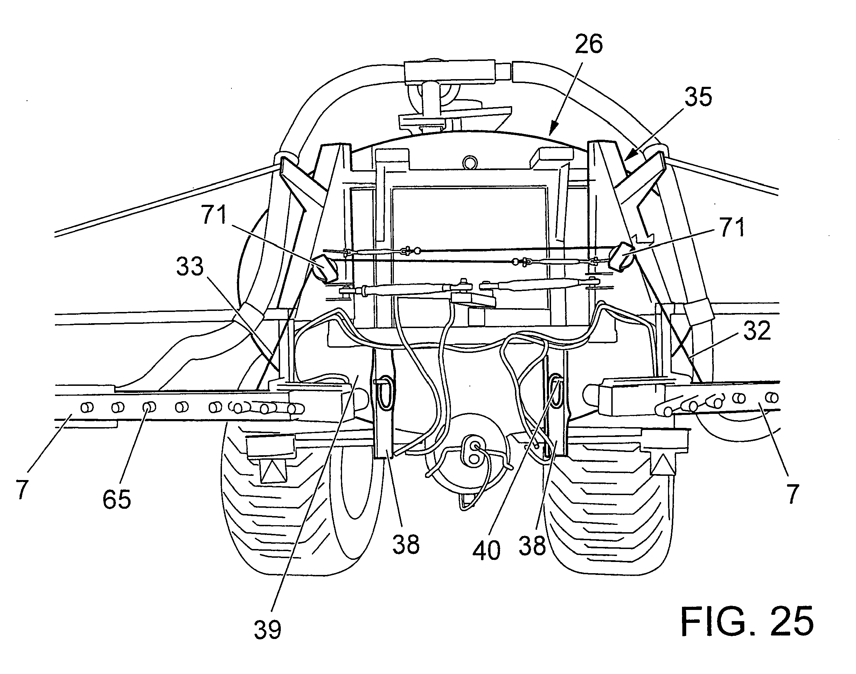

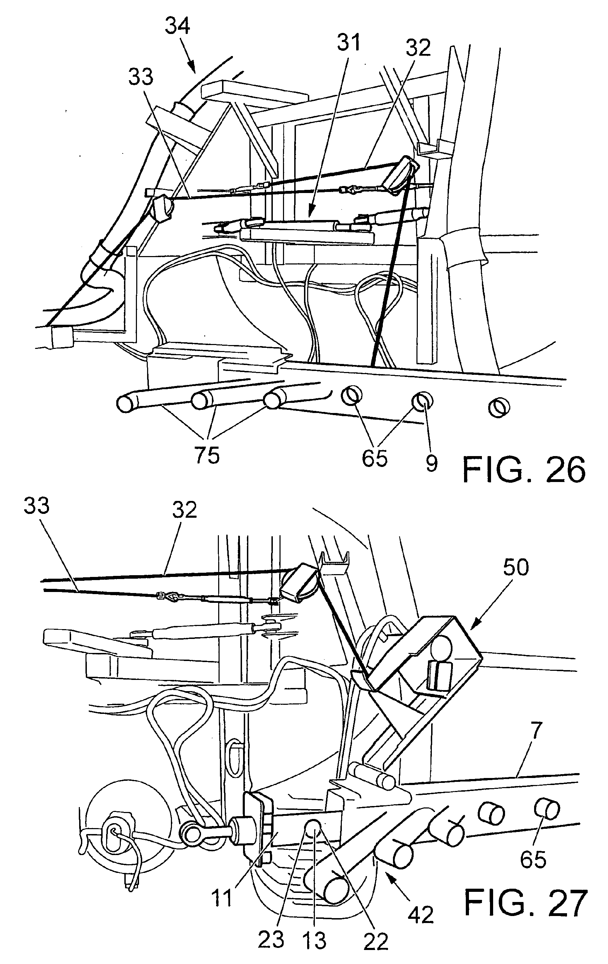

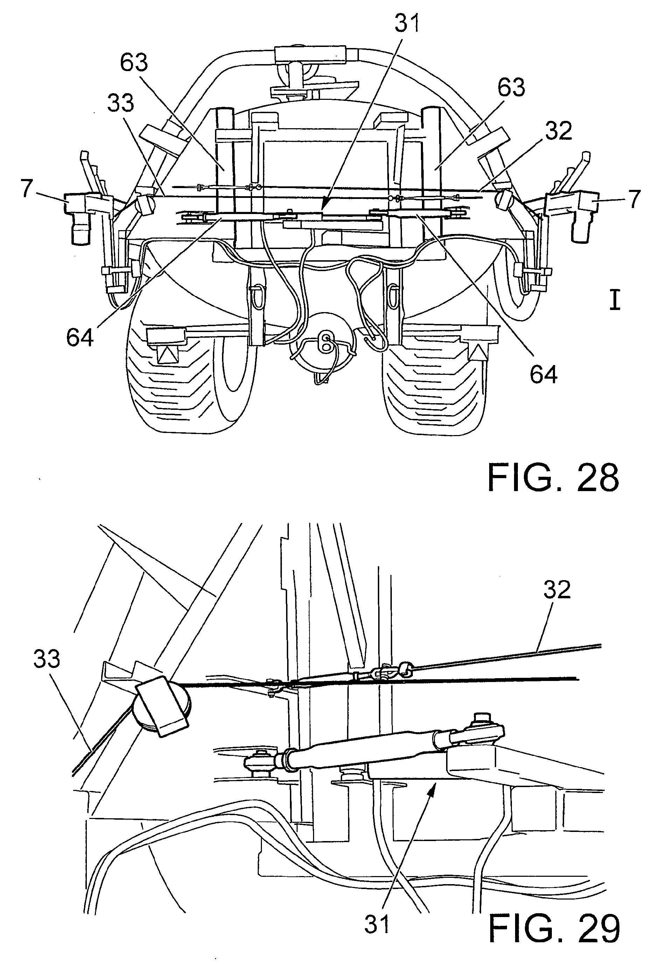

Figs. 19-29 show the spreading ramp and the different motions thereof as well as actuation means.

A device 1, which is arranged at a so-called spreading ramp 2 by which it is intended to spread liquid manure 3 that is supplied to the ground 4 in question from a container 5 when it is run along the intended surface 6 desired to manure, and which spreading ramp 2 is formed of an elongate chute 7 that is closed in the upward direction 8 and which is provided with a plurality of outfeed openings 9 for manure 3 in the bottom portion 10 of the chute, comprises a movably driven plate 11, a plurality of anvils 12, as well as a plurality of holes 13. According to the invention, said plate 11 is formed as an elongate one and situated in the bottom portion 10 of and inside 14 said chute 7. Said plate 11 is movably driven to provide reciprocating motion 15 and 16, respectively, and is provided with a plurality of holes 13 distributed preferably uniformly along the length extension 17 of the plate. On each side 18, 19 of said chute openings 9, anvils 12 are obliquely arranged. Said openings 9 and holes 13 have a circular circumferential shape with preferably straight edges.

Said anvils 12 are, together with the mutually counter-directed opening edges 20, 21 of the chute openings 9, arranged so that they form cutting guides with the hole edges 22, 23 of the plate 11. In addition to providing cutting function, said plate 11 is arranged to also act as a manure distributor inside 14 the chute 7, so that the liquid manure 3 is distributed uniformly to said holes 13 and openings 9.

Said anvils 12 are formed of transverse bars that are extending perpendicularly to the direction of motion 15, 16 and are angled or deflected with a portion 12A in the upward direction 8 from the bottom 10 of the chute 7 as seen in the direction 24, 25 from the chute openings 9 thereof.

Said chute 7 is formed of a pipe that preferably has a quadrangular cross-section profile, suitably a rectangular shape, and preferably consists of a stainless material that is durable, light and that does not require painting and other surface treatment. The chute 7 is, by suitable means, supported pivotably mounted at the rear of a container tank trailer 26 that is towed by a tractor 73 and that comprises a said container 5 for the receipt of liquid manure 3 from kettle. Preferably, a complete spreading ramp 2 is formed of paired chutes 7, with a chute 7 being mounted outwardly swingable in opposite directions 27, 28 on the two respective long sides 29, 30 of the trailer.

Driving to provide motion actuation in the form of swinging and turning of the respective chute 7 is arranged to be effected by means of a common hydraulic-piston device 31, and, in that connection, a number of wires 32, 33 are also included in said driving arrangement 34 for the motion actuation of the chutes, and which are crosswise drawn between the respective chute 7 and ramp frame. Thus, the right chute 7 is connected with the frame of the left chute 7 via a wire 32, while the left chute 7 is connected with the frame of the right chute 7 via an intersecting wire 33. By the wires 32, 33 being arranged so that they are intersecting each other, it is achieved that the ramp including the two pivotably mounted chutes 7 thereof affect each other so that they are hoisted uniformly and smoothly.

A support frame 35 for supporting said chutes 7, as well as for allowing preferably detachable supporting on a container tank trailer 26, suitably consists of common steel material that is painted. By means of a fork-lift truck, it is easy to interconnect a said support frame 35 via rearwardly 36 projecting reception uprights 37 in which the load forks of the truck are received upon elevation of the arrangement to a suitable level and interconnection with attached uprights 38 arranged therefor on the stern 39 of a container tank trailer 26 in question, by, for instance, lockable studs 40 that are received in holes in a row on suitable levels therefor.

Supply of pressurized liquid manure 3 to said respective chute 7 is arranged to be effected via an inlet 41 situated directly at the interior end 42 of the respective chute 7, or via an inlet 43 that at least is situated in the vicinity of said interior end 42 of the respective chute 7.

Inside the respective chute 7, in the area of said inlets 41, 43 at the lower portion thereof, an impact part 44 is arranged that is arranged to, at least partially, cover the drivable plate 11 situated underneath the same. Said impact part 44 is arranged to distribute entering injected liquid manure 3 laterally 45, 46 and preferably also in the forward direction 47. Preferably, the impact part 44 is formed of a fixed plate that the manure 3 strikes with great force when it enters the respective chute 7 of the ramp. A suitable width of said impact plate 44 is approx. 40 mm, and on each side of the same, there is a distance of approx. 45 mm to the respective side walls 48, 49 of the chute 7 so that the strong flow of manure 3, approx. 3,5 m³/min, should not hit directly down into the holes 13 in the reciprocatable plate 11 thereunder, but smoothly and uniformly should be spread to the side thereof before subsequent spreading to the outfeeder part at the bottom portion of the chute.

The driving of said holed 13 plate 11 is arranged to be effected by means of a hydraulic motor 50 situated at one end 42 of the chute or a hydraulic piston (not shown) with eccentric motion having reciprocating driving action on the plate 11 in the forward direction 15 and in the backward direction 16, respectively, along the length extension 17 of the plate. Between the hydraulic motor 50 and the movably actuatable plate 11, a piston rod 51 is arranged, which is arranged so that it can be set to varying stroke length in order to regulate the motion of the plate 11.

At the outer free end 52 of the chute, which can be closed by means of a removable end sleeve 53 and which can be clamped by a known clamping mechanism 54, there is arranged an openable door 55 that is arranged to allow release of solid materials, accumulatable at the outer free end 52 of said chute 7, such as, for instance, larger metal objects, wood objects, plastic washers and stones, which undesirably have end up in the manure 3 intended to be fed out by means of the spreading ramp 2 according to the present invention on the fields. Said door 55 is arranged to be actuated by means of a hydraulic piston or another suitable mechanism therefor.

The respective chute 7, which at the respective end is supported by an elongate frame 56 formed of swingable arms 57, 58 and 59, 60, respectively, having interconnected elongate bars 61, 62 and which is pivotably mounted around a substantially vertical pivot via a pivot mounting 63, is actuatable by said drive mechanism 31 via a piston 64 and wire 32, 33 so as to, in the retraction stage of the same, be lifted as well as rotated approx. 180° so that the respective outlet 9 for manure 3 is turned in the upward direction 8 and allows that undesired spreading by dripping is prevented from occurring. The respective opening 9, which is situated in the bottom 10 of the chute 7, is preferably surrounded by a projecting sleeve coupling 65 around which a hose 66 preferably is arranged to be connected and attached thereto.

The preferably hydraulically actuated door 55 of the chute 7, is arranged to open when the spreading ramp 2 is actuated so that the respective chute 7 is lifted and turned automatically. In that connection, larger objects are evacuated from the internal space 14 of the respective chute, and which cannot be passed down through neither the holes 13 and 9, respectively, in the plate 11 nor in the bottom 10 of the chute. A suitable dimension of an opening for evacuation of such larger objects may be approx. 80-150 mm.

At the top of tank 26, there is a distributing part 67 with which a hose 68, interconnected with the respective chute 7, is connected in order to spread manure 3 from the tank 26 via a pump device situated therein. Said hoses 68 are supported via surrounding hose retainers 69, 70 supported by the frame 56..Said frame 56 also supports rope blocks 71 that redirect the crosswise running wires 32, 33 connected with the respective chute 7. The door 55 is suitably also arranged in such a way that it is turned downward in the rest position I of the chute or at least during motion to said rest position I. That is, it is then situated on the side of the ramp facing away from the tank 26 in the retracted position of the same.

The fully extended manuring position for the spreading ramp 2 and the chutes 7 thereof is designated II while intermediate positions are designated III in the pictures. The function of the invention should have been understood from what has been described above and shown in the drawings. The suitable length of said respective chutes 7 may vary between, for instance, 6-16 m and a number of outfeed holes 9 from the same may be from approx. 30 up to approx. 75 or even more, with a suitable hole distance of approx. 200 mm and with a hole diameter of approx. 40 mm.

The advantages of the present manure spreader versus those on the market today are, among others, that instead of long hoses and a central distributor, the present invention has two box-shaped chutes 7 to which manure 3 by, e.g., 100 mm hose is pumped. In examples shown, the connection of said hose is a distance inward on the top portion of the chutes 7, a number of fixed longer metal pipes 75 projecting in the downward direction from openings in the bottom of the chutes. Preferably, said hoses are connected to interior ends of the chutes 7, wherein such longer pipes can be omitted. Then, the manure is distributed out through a plurality of, for instance, 40 mm large holes 9 having welded-on sleeve couplings 65, and on which sleeve couplings 65 a short hose 66 is attached.

Inside the ramp 7, which contains 10 1 of manure per metre, there is a bottom plate 11 having 0 40 mm holes 13 with a centre-to-centre distance of 200 mm, and above said holes 13, there is a steel 12 on each side of the hole 13 (No. 7), and said steels 12 are situated approx. 5 mm above the lower bottom plate 10, which forms a slit 74 along the ramp. In the same slit 74, from the end of the chute 7, a flat iron 11 is threaded in, which is approx. 4 cm thick and which also has, for instance, Ø 40 mm holes. This flat iron 11, which in the example is 6000 mm long, i.e., as long as the box-shaped chute 7, is connected with a hydraulic motor 50 via a piston rod 51, which makes that, when the hydraulic motor 50 rotates, it moves the flat iron 11 reciprocatingly 15, 16 over outgoing holes 9. This motion distributes the manure 3 uniformly and in different amounts, depending on how the stroke length is set and on the dimension 9, 13 of the holes. This reciprocating motion 15, 16 has a very important function. If some large object, e.g., straw or hay, obstructs outgoing holes 9, said object is cut off between the lower hole 9 and the steel 12 positioned on each side of the hole 9, and then represents a shearing action. Hard parts of manure 3 will be planed into pieces by the plate 11 and facilitate outfeed via the holes 9, while objects that cannot be divided are accumulated in the outer end 52 of the chute 7.

The ramp 2 also has the very great advantage that the spreading of the manure 3 begins inn a straight line, and not as in, e.g., a known device in a "fan shape". Such a known existing hose spreader has nonuniform spreading, since the outermost hoses, which may be up to approx. 8-10 m long, have a strong delay before manure arrives. This is regarded as entirely unacceptable, since cattle manure is increasingly regarded as the only manure ration. Then, as uniform a spreading as possible is required.

As example, it may be mentioned that much work has been undertaken to make fertilizer distributors to spread uniformly, but till now very little has been made when it comes to liquid cattle manure. The distance between the discharges can, with this construction, easily be reduced to a centre-to-centre distance of approx. 100 mm. In the example, a centre-to-centre distance of 200 mm has been selected. Known solutions have a centre-to-centre distance of 300 mm and longer. A shorter centre-to-centre distance of approx. 200 mm is also very important to obtain a uniform spreading.

In addition, the present invention has an additional mode of operation that is very simple but expedient. When the ramp is retracted - by lifting it and rotating it 180° - the hoses are get to point straight up, and thereby become drip-proof. This function manages a single hydraulic cylinder, which becomes three functions on each side of the tank, i.e., as much as six functions with one and the same hydraulic cylinder.

Manure 3 supplied to the spreading ramp 2 from the tank 26 is pressurized and has preferably a pressure of approx. 1, 5 kg, i.e., 1,5 N/m².

Naturally, the invention is not limited to the embodiments described above and shown in the accompanying drawings. Modifications are feasible, particularly as for the nature of the different parts, or by using an equivalent technique, without departing from the protection area of the invention, such as it is defined in the claims.

## Claims

1. A spreading ramp (2) for distributing liquid manure (3) that is supplied to the ground (4) from a container (5) that is run along the intended surface (6) desired to be manured or that is placed or run beside the intended surface desired to be manured and that is connected with the spreading ramp via a hose and which spreading ramp (2) is formed out of an elongate chute (7), whose upper side (8), when in working position, is closed and having a plurality of openings (9) arranged in the bottom portion (10) of the chute, and that said plate (11) is arranged to act as manure distributor inside (14) the chute (7), and that, inside (14) said chute (7), there is a holed (13) elongate plate (11) situated in the bottom portion (10) of the chute and reciprocatingly (15, 16) driven in the longitudinal direction (17) of the chute, **characterized in that** on each side (18, 19) of said chute openings (9), transverse bars (12), that extend perpendicularly to the direction of motion of the plate (11) and are angled or deflected with respect to the bottom side of the chute (7), are arranged, and said bars (12), together with the mutually counter-directed opening edges (20, 21) of the chute openings (9), forming cutting guides with the hole edges (22, 23) of the plate.

2. Ramp according to claim 1, **characterized in that** said bars (12) are angled or deflected in the direction up (8) from the bottom (10) of the chute (7) as seen in the direction (24, 25) from the chute openings (9) thereof.

3. Ramp according to any one of the preceding claims, **characterized in that** the chute (7), which has a quadrangular cross-section profile and which preferably consists of a stainless material, is supported pivotably mounted at the rear of a container tank trailer (26) intended for the receipt of liquid manure, preferably with a chute (7) being mounted outwardly swingable in opposite directions (27,28) on the respective sides (29, 30) of the trailer.

4. Ramp according to claim 3, **characterized in that** driving for motion actuation of the respective chute (7) is arranged to be effected by means of a common hydraulic-piston device (31).

5. Ramp according to claim 4, **characterized in that** a number of wires (32, 33), which are crosswise drawn between the respective chute (7) and ramp frame, i.e., the right chute (7) is connected with the frame of the left chute via a wire (32), while the left chute (7) is connected with the frame of the right chute (7) via an intersecting wire (33), are included in the driving (34) for the motion actuation of the chutes.

6. Ramp according to any one of the preceding claims, **characterized in that** supply of pressurized liquid manure (3) to said chute (7) is arranged to be effected via an inlet (41, 43) situated at the interior end (42) or at least in the vicinity of said interior end (42) of the chute (7).

7. Ramp according to claim 6, **characterized in that**, in the area of said inlet (41, 43) at the lower portion thereof, an impact part (44) is arranged that at least partly covers the drivable plate (11) situated underneath and that is arranged to distribute entering liquid manure (3) laterally (45, 46) and preferably also in the forward direction (47).

8. Ramp according to any one of the preceding claims, **characterized in that** driving of said holed (13) plate (11) is arranged to be effected by means of a hydraulic motor (50) situated at one end (42) of the chute or a hydraulic piston with eccentric motion having reciprocating driving action on the plate (11).

9. Ramp according to claim 8, **characterized in that**, between the hydraulic motor (50) and the plate (11), a piston rod (51) is arranged, which can be set to varying stroke length in order to regulate the motion of the plate (11).

10. Ramp according to any one of the preceding claims, **characterized in that**, at the outer free end (52) of the chute, which may be closed by means of a removable end sleeve (53), an openable door (55) is arranged for evacuation of solid materials accumulatable at the outer free end (52) of said chute (7), such as, for instance, metal objects, wood objects, plastic washers and stones, and that said door (55) is actuated by means of a hydraulic piston.

11. Ramp according to any one of the preceding claims 4-10, **characterized in that** the respective chute (7) is actuatable by said drive mechanism (31) so as to, in the retraction stage of the same, be lifted as well as rotated approx. 180°.

12. Ramp according to any one of the preceding claims, **characterized in that** the respective opening (9) in the bottom (10) of the chute (7) is surrounded by a sleeve coupling (65) to which a hose (66) preferably is arranged to be attached.

## Patentansprüche

1. Ausbreitungsrampe (2) zum Verteilen von Gülle (3), die an den Boden (4) von einem Behälter (5) geliefert wird, der entlang der beabsichtigten Fläche (6), die gedüngt werden soll, gefahren wird oder der neben der beabsichtigten Fläche, die gedüngt werden soll, positioniert ist oder gefahren wird und der mit der Ausbreitungsrampe über einen Schlauch verbunden ist, und wobei die Ausbreitungsrampe (2) aus einer länglichen Rinne (7) geformt ist, deren obere Seite (8) in der Arbeitsposition geschlossen ist und eine Mehrzahl von Öffnungen (9) aufweist, die in dem Bodenabschnitt (10) der Rinne angeordnet sind, und dass die Platte (11) so angeordnet ist, dass sie als Gülleverteiler innerhalb (14) der Rinne (7) wirkt, und dass innerhalb (14) der Rinne (7) eine gelochte (13) längliche Platte (11) vorgesehen ist, die in dem Bodenabschnitt (10) der Rinne gelegen und in der Längsrichtung (17) der Rinne hin und her (15, 16) angetrieben ist,
**dadurch gekennzeichnet, dass**
auf jeder Seite (18, 19) der Rinnenöffnungen (9) Querstäbe (12), die sich rechtwinklig zu der Bewegungsrichtung der Platte (11) erstrecken und in Bezug auf die Bodenseite der Rinne (7) angewinkelt oder ausgelenkt sind, angeordnet sind, und die Stäbe (12) zusammen mit den gegenseitig entgegengesetzt gerichteten Öffnungsrändern (20, 21) der Rinnenöffnungen (9) Schneidführungen mit den Lochrändern (22, 23) der Platte bilden.

2. Rampe nach Anspruch 1,
**dadurch gekennzeichnet , dass**
die Stäbe (12) in der Richtung aufwärts (8) von dem Boden (10) der Rinne (7) bei Betrachtung in der Richtung (24, 25) von deren Rinnenöffnungen (9) angewinkelt oder ausgelenkt sind.

3. Rampe nach einem der vorhergehenden Ansprüche,
**dadurch gekennzeichnet , dass**
die Rinne (7), die ein quadratisches Querschnittsprofil besitzt und die bevorzugt aus einem rostfreien Material besteht, auf der Rückseite eines Behältertankanhängers (26) schwenkbar montiert gelagert ist, der zur Aufnahme von Gülle bestimmt ist, wobei bevorzugt eine Rinne (7) in entgegengesetzte Richtungen (27, 28) nach außen schwingbar an den jeweiligen Seiten (29, 30) des Anhängers montiert ist.

4. Rampe nach Anspruch 3,
**dadurch gekennzeichnet , dass**
ein Antrieb zur Bewegungsbetätigung der jeweiligen Rinne (7) so ausgelegt ist, dass er mittels einer gemeinsamen hydraulischen Kolbenvorrichtung (31) bewirkt wird.

5. Rampe nach Anspruch 4,
**dadurch gekennzeichnet , dass**
eine Anzahl von Drähten (32, 33), die kreuzweise zwischen der jeweiligen Rinne (7) und einem Rampenrahmen gezogen sind, d.h. die rechte Rinne (7) ist mit dem Rahmen der linken Rinne über einen Draht (32) verbunden, während die linke Rinne (7) mit dem Rahmen der rechten Rinne (7) über einen überschneidenden Draht (33) verbunden ist, in dem Antrieb (34) für die Bewegungsbetätigung der Rinnen enthalten sind.

6. Rampe nach einem der vorhergehenden Ansprüche,
**dadurch gekennzeichnet, dass**
die Lieferung von druckbeaufschlagter Gülle (3) an die Rinne (7) so ausgelegt ist, dass sie über einen Einlass (41, 43) bewirkt wird, der an dem inneren Ende (42) oder zumindest in der Nähe des inneren Endes (42) der Rinne (7) gelegen ist.

7. Rampe nach Anspruch 6,
**dadurch gekennzeichnet, dass**
in dem Bereich des Einlasses (41, 43) an dem unteren Abschnitt davon ein Aufprallteil (44) angeordnet ist, das zumindest teilweise die antreibbare Platte (11), die darunter gelegen ist, bedeckt, und das derart angeordnet ist, eintretende Gülle (3) seitlich (45, 46) und bevorzugt auch in der Vorwärtsrichtung (47) zu verteilen.

8. Rampe nach einem der vorhergehenden Ansprüche,
**dadurch gekennzeichnet, dass**
das Antreiben der gelochten (13) Platte (11) derart ausgelegt ist, dass es mittels eines hydraulischen Motors (50), der an einem Ende (42) der Rinne gelegen ist, oder eines Hydraulikkolbens mit exzentrischer Bewegung bewirkt wird, der eine hin- und hertreibende Wirkung auf die Platte (11) besitzt.

9. Rampe nach Anspruch 8,
**dadurch gekennzeichnet, dass**
zwischen dem Hydraulikmotor (50) und der Platte (11) eine Kolbenstange (51) angeordnet ist, die eingerichtet werden kann, um eine Hublänge zu variieren und damit die Bewegung der Platte (11) zu regulieren.

10. Rampe nach einem der vorhergehenden Ansprüche,
**dadurch gekennzeichnet , dass**
an dem äußeren freien Ende (52) der Rinne, das mittels einer entfernbaren Endhülse (53) geschlossen werden kann, eine öffenbare Tür (55) zur Entleerung fester Materialien angeordnet ist, die sich an dem äußeren freien Ende (52) der Rinne (7) ansammeln können, wie beispielsweise Metallobjekte, Holzobjekte, Kunststoffscheiben und Steine, und das die Tür (55) mittels eines hydraulischen Kolbens betätigt ist.

11. Rampe nach einem der vorhergehenden Ansprüche 4 bis 10,
**dadurch gekennzeichnet , dass**
die jeweilige Rinne (7) durch den Antriebsmechanismus (31) betätigbar ist, um so in der Rückstellstufe derselben angehoben wie auch um etwa 180° gedreht zu werden.

12. Rampe nach einem der vorhergehenden Ansprüche,
**dadurch gekennzeichnet , dass**
die jeweilige Öffnung (9) in dem Boden (10) der Rinne (7) durch eine Hülsenkopplung (65) umgeben ist, an der bevorzugt ein entsprechend ausgelegter Schlauch (66) befestigt werden kann.

## Revendications

1. Rampe d'épandage (2) pour la distribution d'engrais liquide (3) au sol (4) à partir d'un réservoir (5) qui est déplacé le long de la surface prévue (6) que l'on souhaite enrichir en engrais ou qui est positionné ou déplacé à proximité de la surface prévue que l'on souhaite enrichir en engrais et qui est connecté à la rampe d'épandage par l'intermédiaire d'un tuyau et dont la rampe d'épandage (2) est conformée en une goulotte d'éjection allongée (7), dont la face supérieure (8), en position de fonctionnement, est fermée et présente une pluralité d'ouvertures (9) conformées dans la partie de fond (10) de la goulotte d'éjection, et cette plaque (11) étant prévue pour agir en tant que distributeur d'engrais à l'intérieur (14) de la goulotte d'éjection (7), et où, à l'intérieur (14) de la goulotte d'éjection (7), une plaque allongée (11) perforée (13) est logée dans la partie inférieure (10) de la goulotte d'éjection et entraînée en mouvements alternatifs (15, 16) dans le sens longitudinal (17) de la goulotte d'éjection, **caractérisée en ce que** des barres transversales (12) disposées de chaque côté (18, 19) desdites ouvertures (9) de la goulotte d'éjection, se prolongent perpendiculairement au sens de déplacement de la plaque (11) et forment un angle ou sont incurvées par rapport à la face du dessous de la goulotte d'éjection (7), et **en ce que** lesdites barres (12), en association avec des bords d'ouverture mutuellement orientés en sens contraire (20, 21) des ouvertures de la goulotte d'éjection (9), forment les guides de coupe avec les bords d'orifice (22, 23) de la plaque.

2. Rampe selon la revendication 1, **caractérisée en ce que** les barres (12) forment un angle ou sont incurvées vers le haut (8) à partir du fond (10) de la goulotte d'éjection (7) vues dans le sens (24, 25) des ouvertures de la goulotte d'éjection (9).

3. Rampe selon l'une quelconque des revendications précédentes, **caractérisée en ce que** la goulotte d'éjection (7), qui présente une section de coupe quadrangulaire et qui est préférentiellement composée d'un matériau inoxydable, est montée pivotante à l'arrière d'un réservoir de remorque (26) prévu pour contenir l'engrais liquide, préférentiellement avec une goulotte d'éjection (7) montée basculante vers l'extérieur selon des directions opposées (27, 28) sur les côtés respectifs (29, 30) de la remorque.

4. Rampe selon la revendication 3, **caractérisée en ce que** l'entraînement pour le déplacement de la goulotte d'éjection respective (7) est prévu pour être effectué au moyen d'un dispositif à piston hydraulique commun (31).

5. Rampe selon la revendication 4, **caractérisée en ce qu'**un certain nombre de câbles (32, 33), qui sont tendus transversalement entre la goulotte d'éjection respective (7) et le bâti de la rampe, c'est-à-dire que la goulotte d'éjection droite (7) est connectée au bâti de la goulotte d'éjection gauche par l'intermédiaire d'un câble (32), tandis que la goulotte d'éjection gauche (7) est connectée au bâti de la goulotte d'éjection droite (7) par l'intermédiaire d'un câble de jonction (33), sont compris dans l'entraînement (34) pour le déplacement des goulottes d'éjection.

6. Rampe selon l'une quelconque des revendications précédentes, **caractérisée en ce que** l'approvisionnement en engrais liquide sous pression (3) pour ladite goulotte d'éjection (7) est prévu pour être effectué par l'intermédiaire d'une admission (41, 43) située à l'extrémité interne (42) ou au moins à proximité de ladite extrémité interne (42) de la goulotte d'éjection (7).

7. Rampe selon la revendication 6, **caractérisée en ce que**, au niveau de ladite admission (41, 43) dans la partie inférieure de celle-ci, une chicane (44) est prévue qui couvre au moins en partie la plaque déplaçable (11) située dessous et qui est prévue pour distribuer l'engrais liquide entrant (3) latéralement (45, 46) et préférentiellement également vers l'avant (47).

8. Rampe selon l'une quelconque des revendications précédentes, **caractérisée en ce que** l'entraînement de ladite plaque (11) perforée (13) est prévu pour être effectué à l'aide d'un moteur hydraulique (50) monté à une extrémité (42) de la goulotte d'éjection ou d'un piston hydraulique selon un mouvement excentrique entraînant la plaque (11) en un déplacement alternatif.

9. Rampe selon la revendication 8, **caractérisée en ce qu'**une tige de piston (51) est prévue entre le moteur hydraulique (50) et la plaque (11), qui peut être réglée pour modifier la longueur de course afin d'assujettir le déplacement de la plaque (11).

10. Rampe selon l'une quelconque des revendications précédentes, **caractérisée en ce que**, à l'extrémité libre externe (52) de la goulotte d'éjection, qui peut être fermée à l'aide d'un manchon amovible d'extrémité (53), une trappe ouvrable (55) est prévue pour l'évacuation des matériaux solides qui peuvent s'accumuler au niveau de l'extrémité libre externe (52) de ladite goulotte d'éjection (7), comme, par exemple, des objets en métal, des objets en bois, des rondelles en plastique et des pierres, et **en ce que** ladite trappe (55) est actionnée au moyen d'un piston hydraulique.

11. Rampe selon l'une quelconque des revendications 4 à 10 précédentes, **caractérisée en ce que** la goulotte d'éjection respective (7) peut être actionnée par ledit mécanisme d'entraînement (31), de sorte qu'au cours de la rétraction de celle-ci, elle est soulevée ainsi que pivotée d'approximativement 180°.

12. Rampe selon l'une quelconque des revendications précédentes, **caractérisée en ce que** l'ouverture respective (9) dans le fond (10) de la goulotte d'éjection (7) est entourée par un manchon d'accouplement (65) auquel il est préférentiellement prévu de fixer un tuyau (66).
